# EUROPEAN PATENT SPECIFICATION

(11) **EP 2 662 004 B1**
(45) Date of publication and mention of the grant of the patent: **27.08.2014**
(21) Application number: 12166924.6
(22) Date of filing: 07.05.2012
(51) Int. Cl.: A47J 36/34

(54) **A temperature detection device for detecting the bottom temperature of cookware on a cooking hob**
Temperaturdetektionseinrichtung zur Temperaturbestimmung des Bodens eines auf einem Kochfeld aufgestellten Kochgefäss
Dispositif de détection de la temperature pour détecter la temperature du fond d'une casserole sur une plaque de cuisson

(43) Date of publication of application: 13.11.2013
(73) Proprietor: Electrolux Home Products Corporation N.V., 1130 Brussels (BE)
(72) Inventor: Holzgreve, Eva, 33080 Porcia (IT); Herzog, Michael, 91541 Rothenburg o. d. Tauber (DE); Burkhardt, Jennifer, 91541 Rothenburg o. d. Tauber (DE); Kallert, Uwe, 91541 Rothenburg o. d. Tauber (DE)
(74) Representative: Baumgartl, Gerhard Willi

(56) References cited:
- EP-A2- 0 883 327
- DE-A1- 19 828 170
- JP-A- 63 269 488
- US-A- 4 607 613
- US-A- 5 196 677

## Description

The present invention relates to a temperature detection device for detecting the bottom temperature of cookware on a cooking hob according to the preamble of claim 1.

The temperature of a cookware on a cooking hob is a basic parameter for controlling the cooking process of food stuff placed in said cookware. In conventional cooking hobs there are several methods for detecting the temperature of the cookware on said cooking hob.

For example, in a cooking hob with a glass ceramic panel a sensor is placed below the glass ceramic panel on which the cookware is placed. The detected temperature is used for controlling the temperature of cookware above. According to another example the temperature of a wall of the cookware is detected by a pyrometer-like sensor from the outside of said cookware. Further, cookware with integrated sensors in the bottom is known, wherein information about the temperature is transferred wireless to the cooking hob. Moreover, the use of a surface acoustic wave (SAW) temperature sensor for controlling the cooking process is known. However, for every cooking pot at least one SAW temperature sensor is required.

DE 198 28 170 A1 discloses cookware with a SAW sensor at the side wall or on the cover plate of said cookware. However, the SAW temperature sensor has to be installed at each cooking pot.

JP 63 269488 A discloses a table put on a surface of an induction cooking hob. A cooking vessel is arranged upon said table. An induction coil heats ups the cooking vessel. The heat is conveyed to the table and to the surface of the induction cooking hob by heat conductivity. The table includes a temperature sensor and means for sending wireless signals to a receiving device in the induction cooking hob. The table restricts the temperature rise in the surface and allows an automatic cooking.

EP 0 883 327 A2 discloses a device for wireless detecting the temperature of a cooking vessel on a cooking hob. A SAW temperature sensor is arranged in or attached at the cooking vessel. For example, the SAW temperature sensor is embedded in an insulating layer arranged inside the bottom of the cooking vessel. Further, the SAW temperature sensor may be attached within a handle of the cooking vessel. Moreover, the SAW temperature sensor may be attachable by an undercoating at an outer side of the cooking vessel.

It is an object of the present invention to provide a temperature detection device for detecting the temperature of cookware on a cooking hob, which allows a sufficiently exact detection of the temperature by low complexity.

The object of the present invention is achieved by the temperature detection device according to claim 1.

According to the present invention the pad is provided as an underlayment of the cookware and comprises at least one gap provided for the centre of the corresponding cooking zone.

The main idea of the present invention is the use of the heat resistant pad with the embedded SAW temperature sensor. The pad is provided as an intermediate layer between the cooking hob and the bottom of the cookware. The pad is a separate sheet. There is no cable connection to the cookware or cooking hob. Thus, the user can put and remove the pad without any additional activities. Conventional cookware may be used in combination with the inventive pad. The gap allows that the user can easily find the correct position of the pad on the cooking zone.

In particular, the sensor antenna is in a border area of the pad, so that the sensor antenna is arranged outside the cooking zone.

Preferably, the SAW temperature sensor is arranged in that portion of the pad, which corresponds with a position close to the centre of the cooking zone.

Further, the pad may be movable and removable on the cooking hob.

For example, the pad has a thickness between 2 mm and 3 mm.

In particular, the heat resistance of the material of the pad is at least 250°C.

Preferably, the pad is made of silicone.

Further, the pad is made of a non-magnetic material. Thus, the pad is suitable for an induction cooking hob.

For example, the pad has a rectangular or square shape.

Alternatively, the pad may be formed as a circular disk.

According to another example, the pad may have an oval shape.

Moreover, the pad may be provided for covering two or more neighboured cooking zones of the cooking hob, wherein one SAW temperature sensor and one sensor antenna corresponds with one cooking zone.

At last the pad is provided for an induction cooking hob, wherein the SAW temperature sensor is arranged in that portion of the pad, which corresponds with a position close to the coil centre of the induction cooking hob.

Novel and inventive features of the present invention are set forth in the appended claims.

The present invention will be described in further detail with reference to the drawings, in which
- FIG 1: illustrates a schematic top view of a cooking hob with a pad according to a first embodiment not forming part of the present invention such as claimed,
- FIG 2: illustrates a schematic top view of the cooking hob with the pad according to a second embodiment not forming part of the present invention such as claimed,
- FIG 3: illustrates a schematic top view of the cooking hob with the pad according to a third embodiment not forming part of the present invention such as claimed,
- FIG 4: illustrates a schematic top view of the cooking hob with the pad according to a fourth embodiment not forming part of the present invention such as claimed,
- FIG 5: illustrates a schematic top view of the cooking hob with the pad according to a fifth embodiment not forming part of the present invention such as claimed,
- FIG 6: illustrates a schematic top view of the cooking hob with the pad according to a sixth embodiment not forming part of the present invention such as claimed, and
- FIG 7: illustrates a schematic top view of the cooking hob with the pad according to the present invention.

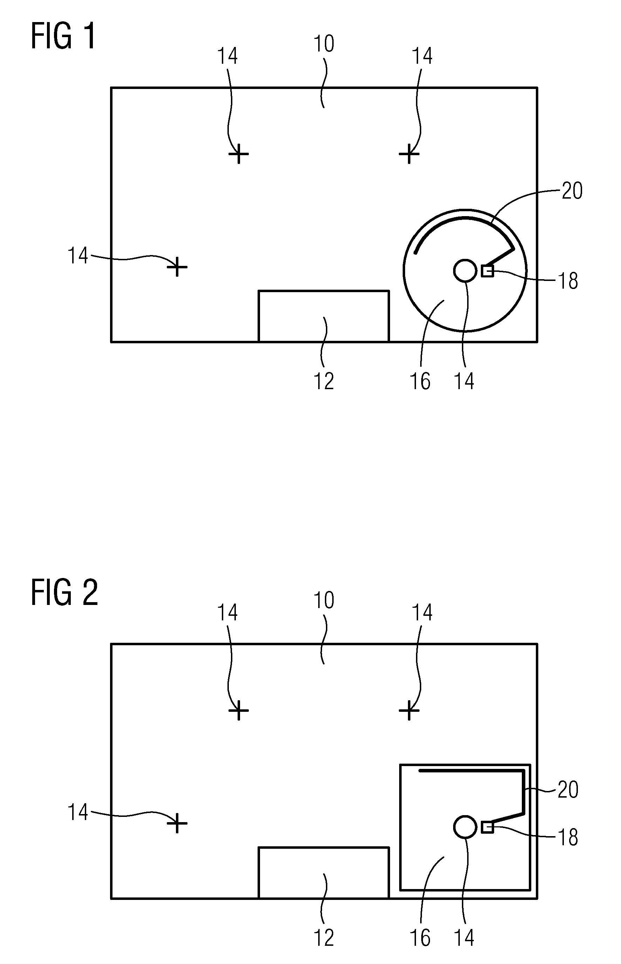

FIG 1 illustrates schematic top view of a cooking hob 10 with a pad 16 according to a first embodiment. In these examples, the cooking hob 10 is an induction cooking hob with four cooking zones. Each cooking zone corresponds with an induction coil. Four coil centres 14 are marked on the crooking hob 10, so that the user can recognize the positions of the induction coils. Further, the cooking hob 10 comprises a control and display device 12. In general, the pad 16 is provided and suitable for arbitrary cooking hobs, in particular for a cooking hob with a glass ceramic panel.

The pad 16 is a flexible sheet and lies removably on the cooking hob 10. The pad 16 is made of a heat resistant material. In particular, the pad 16 is made of silicone. Preferably, the pad 16 has a thickness between 2 mm and 3 mm. In this embodiment, the pad 16 is a circular disk and covers one cooking zone. The pad 16 is provided for an underlayment of cookware. Thus, the pad 16 forms an intermediate layer between the cooking hob 10 and the bottom side of the cookware.

The pad 16 includes a surface acoustic wave (SAW) temperature sensor 18 and a sensor antenna 20. The SAW temperature sensor 18 and the sensor antenna 20 are embedded in the pad 16. The SAW temperature sensor 18 is arranged in a central portion of the pad 16. Preferably, the SAW temperature sensor 18 is arranged close to the coil centre 14 of the corresponding cooking zone. The sensor antenna 20 is arranged in a border area of the pad 16. The SAW temperature sensor 18 detects the temperature of the cookware above the pad 16.

The SAW temperature sensor 18 is provided for a wireless connection to a reader via the sensor antenna 20 and a reader antenna. The reader and reader antenna are not shown. The reader sends electromagnetic waves to the SAW temperature sensor 18 via the reader antenna and the sensor antenna 20. Further, the reader 14 is provided for receiving electromagnetic waves from the SAW temperature sensor 18 via the sensor antenna 20 and the reader antenna.

The electromagnetic waves from the reader provide the SAW temperature sensor 18 with energy. The electromagnetic waves emitted by the SAW temperature sensor 18 provide the reader with information about the detected temperature. The reader is electrically connected to a control unit of the cooking hob 10. The information about the temperature can be used for controlling the cooking process.

The pad 16 including the SAW temperature sensor 18 and the sensor antenna 20 allows a sufficient contact between the cookware and the SAW temperature sensor 18 during the whole cooking process. A modification of the cookware is not required. The pad 16 with the SAW temperature sensor 18 and the sensor antenna 20 is easy to handle for the user. The temperature of an arbitrary cookware can be detected without any modification of said cookware.

If the pad 16 is substantially congruent with the cooking zone, then the SAW temperature sensor 18 is automatically close to the coil centre 14, since the SAW temperature sensor 18 is arranged in the central portion of the pad 16. The position of the SAW temperature sensor 18 is a few cm from the coil centre 14, which is the hottest area of the cooking zone.

The SAW temperature sensor 18 and the sensor antenna 20 are no barriers for the user, since the pad 16 with the SAW temperature sensor 18 and the sensor antenna 20 is formed as a flat sheet.

Preferably, the material of the pad 16 has a heat resistance of at least 250°C. Further, the material of the pad 16 is non-magnetic.

FIG 2 illustrates a schematic top view of the cooking hob 10 with the pad 16 according to a second embodiment. The pad 16 of the second embodiment is a square sheet and sufficient for covering one cooking zone. The other properties are the same as in the first embodiment.

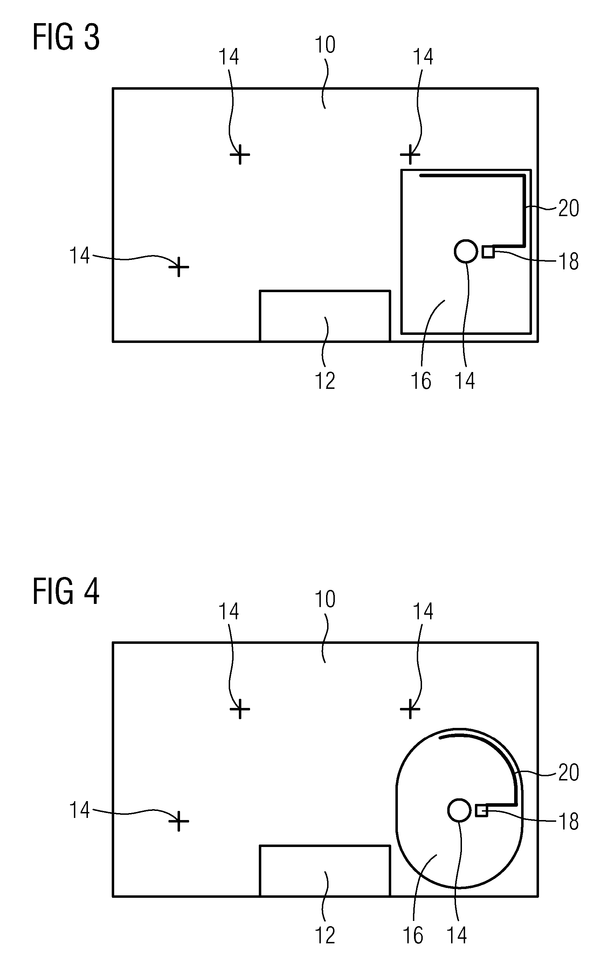

FIG 3 illustrates a schematic top view of the cooking hob 10 with the pad 16 according to a third embodiment. The pad 16 of the third embodiment is a rectangular sheet. The pad 16 is sufficient for covering one cooking zone. The other properties are the same as in the first and second embodiments.

FIG 4 illustrates a schematic top view of the cooking hob 10 with the pad 16 according to a fourth embodiment. The pad 16 of the fourth embodiment is an oval sheet. The pad 16 is provided for covering one of the cooking zones. In particular, the oval pad 16 is suitable for cookware with a longish bottom side. The other properties are the same as in the embodiments mentioned above.

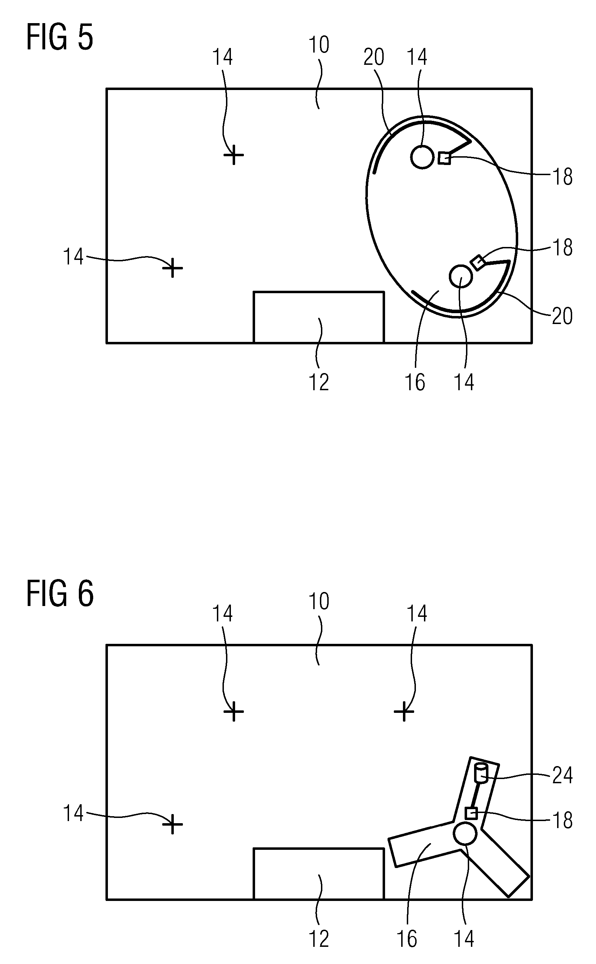

FIG 5 illustrates a schematic top view of the cooking hob 10 with the pad 16 according to a fifth embodiment. The pad 16 of the fifth embodiment is an oval sheet. The pad 16 is provided for covering two neighboured cooking zones.

The pad 16 includes two SAW temperature sensors 18 and two sensor antennae 20, wherein one SAW temperature sensor 18 corresponds with one sensor antenna 20 in each case. Further, each SAW temperature sensor 18 corresponds with one induction coil. For both cooking zones the temperatures may be detected independent from each other.

The pad 16 of the fifth embodiment is suitable for cookware with a longish bottom side extending over the both cooking zones. Further, the pad 16 of the fifth embodiment is also suitable for cookware covering one of the both cooking zones, wherein only one of the two SAW temperature sensors 18 is used. Moreover, the pad 16 of the fifth embodiment is suitable for two cooking pots covering one cooking zone in each case, wherein the two SAW temperature sensors 18 are used independent from each other.

FIG 6 illustrates a schematic top view of the cooking hob 10 with the pad 16 according to a sixth embodiment. The pad 16 of the sixth embodiment is star-shaped with three tines or formed as a propeller with three blades.

The SAW temperature sensor 18 is arranged in an inner portion of one of the spikes or blades, respectively. In an outer portion of the same spike or blade, respectively, the sensor antenna 20 is arranged inside a small casing 24. Since the casing 24 extends upwards from the pad 16, the cookware has to be put besides the casing 24 with the sensor antenna 20.

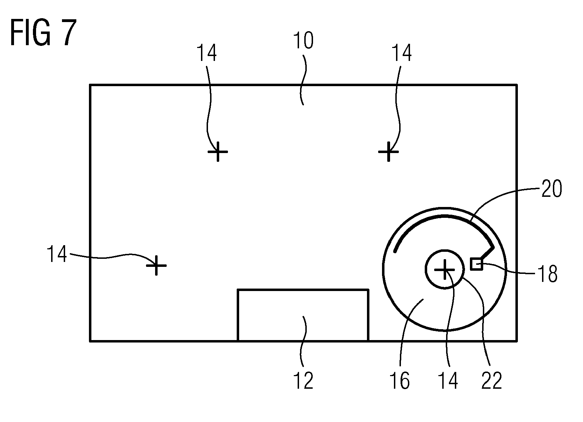

FIG 7 illustrates a schematic top view of the cooking hob 10 with the pad 16 according to the present invention. The pad 16 is similar to that of the first embodiment. Thus, the pad 16 is a circular disk and covers one cooking zone.

Additionally, the pad 16 comprises a gap 22 in its centre. Said gap 22 is formed as a round hole. The gap 22 allows the user to align the pad 16 congruent with the cooking zone, wherein the gap 22 is provided for the position above the coil centre. The gap 22 contributes to the correct position of the pad 16.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention such as claimed. All such changes and modifications are intended to be included within the scope of the invention as defined by the appended claims.

### List of reference numerals

- 10: cooking hob
- 12: control and display device
- 14: coil centre
- 16: pad
- 18: surface acoustic wave (SAW) temperature sensor
- 20: sensor antenna
- 22: gap
- 24: casing

## Claims

1. A temperature detection device for detecting the bottom temperature of cookware on a cooking hob (10), wherein:
- the temperature detection device comprises a pad (16) formed as a flat sheet,
- the pad (16) is provided for covering at least one cooking zone of the cooking hob (10),
- the pad (16) is made of a heat resistant material,
- the temperature detection device comprises at least one SAW (surface acoustic wave) temperature sensor (18),
- the temperature detection device comprises at least one sensor antenna (20),
- the SAW temperature sensor (18) is electrically connected to the sensor antenna (20),
- the SAW temperature sensor (18) is embedded inside the pad (16), and
- the sensor antenna (20) is embedded inside the pad (16) or arranged in a casing (24) above the pad (16)
**characterized in that**
the pad (16) is provided as an underlayment of the cookware and comprises at least one gap (22) provided for the centre (14) of the corresponding cooking zone.

2. The temperature detection device according to claim 1,
**characterized in that**
the sensor antenna (20) is in a border area of the pad (16), so that the sensor antenna (20) is arranged outside the cooking zone.

3. The temperature detection device according to claim 1 or 2,
**characterized in that**
the SAW temperature sensor (18) is arranged **in that** portion of the pad (16), which corresponds with a position close to the centre (14) of the cooking zone.

4. The temperature detection device according to any one of the preceding claims,
**characterized in that**
the pad (16) is movable and removable on the cooking hob (10).

5. The temperature detection device according to any one of the preceding claims,
**characterized in that**
the pad (16) has a thickness between 2 mm and 3 mm.

6. The temperature detection device according to any one of the preceding claims,
**characterized in that**
the heat resistance of the material of the pad (16) is at least 250°C.

7. The temperature detection device according to any one of the preceding claims,
**characterized in that**
the pad (16) is made of silicone.

8. The temperature detection device according to any one of the preceding claims,
**characterized in that**
the pad (16) is made of a non-magnetic material.

9. The temperature detection device according to any one of the preceding claims,
**characterized in that**
the pad (16) has a rectangular or square shape.

10. The temperature detection device according to any one of the claims 1 to 8,
**characterised in that**
the pad (16) is formed as a circular disk.

11. The temperature detection device according to any one of the claims 1 to 8,
**characterized in that**
the pad (16) has an oval shape.

12. The temperature detection device according to any one of the preceding claims,
**characterized in that**
the pad (16) is provided for covering two or more neighboured cooking zones of the cooking hob (10), wherein one SAW temperature sensor (18) and one sensor antenna (20) corresponds with one cooking zone.

13. The temperature detection device according to any one of the preceding claims,
**characterized in that**
the pad (16) is provided for a cooking hob (10) with a glass ceramic panel.

14. The temperature detection device according to any one of the preceding claims,
**characterized in that**
the pad (16) is provided for an induction cooking hob (10), wherein the SAW temperature sensor (18) is arranged **in that** portion of the pad (16), which corresponds with a position close to the coil centre (14) of the induction cooking hob (10).

## Patentansprüche

1. Temperaturerkennungsvorrichtung zum Erkennen der Bodentemperatur von Kochgeschirr auf einem Kochfeld (10), wobei:
- die Temperaturerkennungsvorrichtung ein Pad (16) aufweist, das als flache Platte ausgebildet ist,
- das Pad (16) zum Abdecken von mindestens einem Kochbereich auf dem Kochfeld (10) vorgesehen ist,
- das Pad (16) aus einem hitzebeständigen Material hergestellt ist,
- die Temperaturerkennungsvorrichtung mindestens einen SAW- (Oberflächenschallwellen-) Temperatursensor (18) aufweist,
- die Temperaturerkennungsvorrichtung mindestens eine Sensorantenne (20) aufweist,
- der SAW-Temperatursansor (18) elektrisch mit der sensorantenne verbunden ist,
- der SAW-Temperatursensor (18) innerhalb des Pads (16) eingelassen ist und
- die Sensorantenne (20) innerhalb des Pads (16) eingelassen ist oder in einem Gehäuse (24) über dem Pad (16) angeordnet ist,
**dadurch gekennzeichnet, dass**
das Pad (16) als Unterlage des Kochgeschirrs vorgesehen ist und mindestens einen Spalt (22) aufweist, der für das Zentrum (14) des entsprechenden Kochbereichs vorgesehen ist.

2. Temperaturerkennungsvorrichtung nach Anspruch 1, **dadurch gekennzeichnet, dass** sich die Sensorantenne (20) in einem Grenzbereich des Pads (16) befindet, sodass die Sensorantenne (20) außerhalb des Kochbereichs angeordnet ist.

3. Temperaturerkennungsvorrichtung nach einem der Ansprüche 1 oder 2, **dadurch gekennzeichnet, dass** der SAW-Temperatursensor (18) in dem Abschnitt des Pads (16) angeordnet ist, der einer Position nahe dem Zentrum (14) des Kochbereichs entspricht.

4. Temperaturerkennungsvorrichtung nach einem der vorhergehenden Ansprüche, **dadurch gekennzeichnet, dass** das Pad (16) auf dem Kochfeld (10) beweglich und davon abnehmbar ist.

5. Temperaturerkennungsvorrichtung nach einem der vorhergehenden Ansprüche, **dadurch gekennzeichnet, dass** das Pad (16) eine Stärke zwischen 2 mm und 3 mm aufweist.

6. Temperaturerkennungsvorrichtung nach einem der vorhergehenden Ansprüche, **dadurch gekennzeichnet, dass** die Hitzebeständigkeit des Materials des Pads (16) mindestens 250 °C beträgt.

7. Temperaturarkennungsvorrichtung nach einem der vorhergehenden Ansprüche, **dadurch gekennzeichnet, dass** das Pad (16) aus Silikon hergestellt ist.

8. Temperaturerkennungsvorrichtung nach einem der vorhergehenden Ansprüche, **dadurch gekennzeichnet, dass** das Pad (16) aus nichtmagnetischem Material hergestellt ist.

9. Temperaturerkennungsvorrichtung nach einem der vorhergehenden Ansprüche, **dadurch gekennzeichnet, dass** das Pad (16) eine rechteckige oder quadratische Form aufweist.

10. Temperaturerkennungsvorrichtung nach einem der Ansprüche 1 bis 8, **dadurch gekennzeichnet, dass** das Pad (16) als kreisförmige Scheibe ausgebildet ist.

11. Temperaturerkennungsvorrichtung nach einem der Ansprüche 1 bis 8, **dadurch gekennzeichnet, dass** das Pad (16) eine ovale Form aufweist.

12. Temperaturerkennungsvorrichtung nach einem der vorhergehenden Ansprüche, **dadurch gekennzeichnet, dass** das Pad (16) zum Abdecken von zwei oder mehr benachbarten Kochbereichen des Kochfelds (10) vorgesehen ist, wobei ein SAW-Temperatursensor (18) und eine Sensorantenne (20) einem Kochbereich entsprechen.

13. Temperaturerkennungsvorrichtung nach einem der vorhergehenden Ansprüche, **dadurch gekennzeichnet, dass** das Pad (16) für ein Kochfeld (10) mit einer GJ.askeramikplatte vorgesehen ist.

14. Temperaturerkennungsvorrichtung nach einem der vorhergehenden Ansprüche, **dadurch gekennzeichnet, dass** das Pad (16) für ein Induktionskochfeld (10) vorgesehen ist, wobei der SAW-Temperatursensor (18) in dem Abschnitt des Pads (16) angeordnet ist, der einer Position nahe dem Spulenzentrum (14) des Induktionskochfelds (10) entspricht.

## Revendications

1. Dispositif de détection de température destiné à détecter la température de fond d'un ustensile de cuisson sur une plaque (10) de cuisson :
- le dispositif de détection de température comportant un patin (16) formé comme une feuille plate,
- le patin (16) étant prévu pour recouvrir au moins une zone de cuisson de la plaque (10) de cuisson,
- le patin (16) étant constitué d'un matériau résistant à la chaleur,
- le dispositif de détection de température comporte au moins un capteur (18) de température à SAW (ondes acoustiques de surface),
- le dispositif de détection de température comporte au moins une antenne (20) de capteur,
- le capteur (18) de température à SAW étant relié électriquement à l'antenne (20) de capteur,
- le capteur (18) de température à SAW étant encastré à l'intérieur du patin (16), et
- l'antenne (20) de capteur étant encastrée à l'intérieur du patin (16) ou disposée dans un boîtier (24) au-dessus du patin (16),
**caractérisé en ce que**
le patin (16) est prévu comme un soubassement de l'ustensile de cuisson et comporte au moins un vide (22) ménagé pour le centre (14) de la zone de cuisson correspondante.

2. Dispositif de détection de température selon la revendication 1,
**caractérisé en ce que**
l'antenne (20) de capteur se trouve dans une zone de bordure du patin (16), de telle façon que l'antenne (20) de capteur soit disposée à l'extérieur de la zone de cuisson.

3. Dispositif de détection de température selon la revendication 1 ou 2,
**caractérisé en ce que**
le capteur (18) de température à SAW est disposé dans la partie du patin (16) qui correspond à une position proche du centre (14) de la zone de cuisson.

4. Dispositif de détection de température selon l'une quelconque des revendications précédentes,
**caractérisé en ce que**
le patin (16) est mobile et amovible sur la plaque (10) de cuisson.

5. Dispositif de détection de température selon l'une quelconque des revendications précédentes,
**caractérisé en ce que**
le patin (16) présente une épaisseur comprise entre 2 mm et 3 mm.

6. Dispositif de détection de température selon l'une quelconque des revendications précédentes,
**caractérisé en ce que**
la résistance à la chaleur du matériau du patin (16) est d'au moins 250 °C.

7. Dispositif de détection de température selon l'une quelconque des revendications précédentes,
**caractérisé en ce que**
le patin (16) est constitué de silicone.

8. Dispositif de détection de température selon l'une quelconque des revendications précédentes,
**caractérisé en ce que**
le patin (16) est constitué d'un matériau non magnétique.

9. Dispositif de détection de température selon l'une quelconque des revendications précédentes,
**caractérisé en ce que**
le patin (16) est de forme rectangulaire ou carrée.

10. Dispositif de détection de température selon l'une quelconque des revendications 1 à 8,
**caractérisé en ce que**
le patin (16) est formé comme un disque circulaire.

11. Dispositif de détection de température selon l'une quelconque des revendications 1 à 8,
**caractérisé en ce que**
le patin (16) est de forme ovale.

12. Dispositif de détection de température selon l'une quelconque des revendications précédentes,
**caractérisé en ce que**
le patin (16) est prévu pour recouvrir au moins deux zones de cuisson voisines de la plaque (10) de cuisson, un capteur (18) de température SAW et une antenne (20) de capteur correspondant à une zone de cuisson.

13. Dispositif de détection de température selon l'une quelconque des revendications précédentes,
**caractérisé en ce que**
le patin (16) est prévu pour une plaque (10) de cuisson dotée d'un panneau en vitrocéramique.

14. Dispositif de détection de température selon l'une quelconque des revendications précédentes,
**caractérisé en ce que**
le patin (16) est prévu pour une plaque (10) de cuisson à induction, le capteur (18) de température à SAW étant disposé dans la partie du patin (16) qui correspond à une position proche du centre (14) de la bobine de la plaque (10) de cuisson à induction.
